# EUROPEAN PATENT SPECIFICATION

(11) **EP 0 520 468 B1**
(45) Date of publication and mention of the grant of the patent: **05.06.1996**
(21) Application number: 92110776.9
(22) Date of filing: 26.06.1992
(51) Int. Cl.: G01P 9/04, G01C 19/56

(54) **Vibratory gyroscope**
Vibrationskreisel
Gyroscope de vibration

(30) Priority: 26.06.1991 JP 183217/91; 26.06.1991 JP 183218/91; 09.07.1991 JP 195684/91; 16.07.1991 JP 202513/91
(43) Date of publication of application: 30.12.1992
(73) Proprietor: MURATA MANUFACTURING CO., LTD., Nagaokakyo-shi Kyoto-fu 226 (JP)
(72) Inventor: Nakamura, Takeshi,c/o Murata Manufac., Co., Ltd., Nagaokakyo-shi, Kyoto-fu (JP); Iwai, Kiyoshi,c/o Murata Manufac., Co., Ltd., Nagaokakyo-shi, Kyoto-fu (JP); Yamamoto, Shigeto,c/o Murata Manufac., Co., Ltd., Nagaokakyo-shi, Kyoto-fu (JP); Okano, Keiichi,c/o Murata Manufac., Co., Ltd., Nagaokakyo-shi, Kyoto-fu (JP)
(74) Representative: Schoppe, Fritz, Dipl.-Ing.

(56) References cited:
- DE-A- 3 841 654
- DE-A- 3 926 504
- US-A- 5 014 554
- PATENT ABSTRACTS OF JAPAN vol. 015, no. 205 (P-1206)27 May 1991 & JP-A-03053110
- PATENT ABSTRACTS OF JAPAN vol. 9, no. 174 (P-374)(1897) 19 July 1985 & JP-A-60049216

## Description

The present invention relates to a vibratory gyroscope, particularly, for example, to a vibratory gyroscope used in a navigation system of an automobile or for protecting an unsteady hold on a video-camera and so on.

### Description of the Prior Art

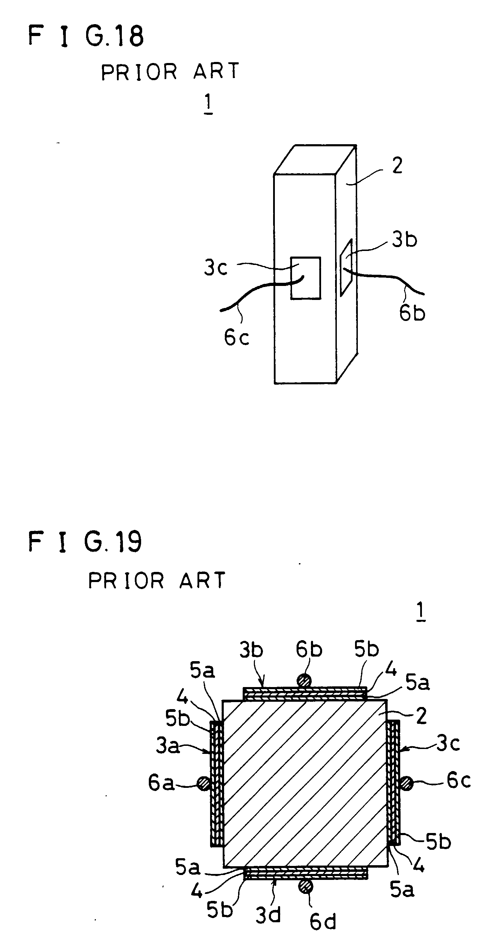

Fig. 18 is a perspective view showing an example of a conventional vibratory gyroscope which is a background of the present invention, and Fig. 19 is a sectional view thereof. The vibratory gyroscope 1 comprises a quadrangular prism-shaped vibrating body 2. On four side faces of the vibrating body 2, piezoelectric elements 3a, 3b, 3c and 3d are formed. The piezoelectric elements 3a-3d comprise piezoelectric bodies 4, on both surfaces of which electrodes 5a and 5b are formed respectively, and one electrodes 5a are bonded to the vibrating body 2. Furthermore, to the other electrodes 5b of the piezoelectric elements 3a, 3b, 3c and 3d, one ends of lead wires 6a, 6b, 6c and 6d having a circular section are connected by means of soldering or the like.

In the vibratory gyroscope 1 shown in Fig. 18 and Fig. 19, a driving signal is applied to the opposing piezoelectric elements 3a and 3c via the lead wires 6a and 6c, thereby the vibrating body 2 bends and vibrates. When a rotational angular velocity is applied about an axis of the vibrating body 2, a vibrating direction of the vibrating body 2 changes due to a Coriolis force. Thereby, voltages are generated in the other opposing piezoelectric elements 3b and 3c, the rotational angular velocity is measured by measuring the voltages.

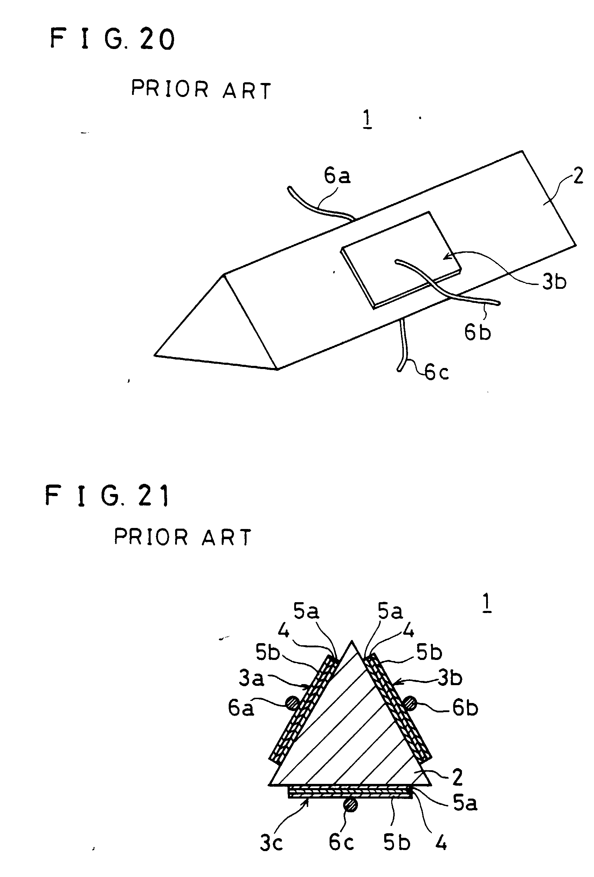

Fig. 20 is a perspective view showing another example of the conventional vibratory gyroscope which is a background of the present invention, and Fig. 21 is a sectional view thereof. The vibratory gyroscope 1 comprises a triangular prism-shaped vibrating body 2. On three side faces of the vibrating body 2, piezoelectric elements 3a, 3b, and 3c are formed. The piezoelectric elements 3a-3c comprise piezoelectric bodies 4, on both surfaces of which electrodes 5a and 5b are formed, and one electrodes 5a are bonded to the vibrating body 2. Furthermore, to the other electrodes 5b of the piezoelectric elements 3a, 3b and 3c, one ends of lead wires 6a, 6b and 6c having a circular section are connected by means of soldering or the like.

When using the vibratory gyroscope 1 shown in Fig. 20 and Fig. 21, a driving signal is applied between the piezoelectric elements 3a, 3b and 3c. By the driving signal, the vibrating body 2 bends and vibrates in a direction orthogonal to a face whereon the piezoelectric element 3c is formed. When rotating about an axial direction of the vibrating body 2, a vibrating direction changes due to the Coriolis force. Thereby, voltages are generated in the piezoelectric elements 3a and 3b, the rotational angular velocity is measured by measuring a difference between the voltages.

In these vibratory gyroscopes, however, an outside vibration is transmitted to the vibrating body via the lead wires to affect the inherent vibration of the vibrating body. And hence, it is difficult to measure a correct rotational angular velocity.

Meanwhile, in these vibratory gyroscopes, since the lead wires are drawn out to air from the piezoelectric elements, the outside vibration is transmitted to the vibrating body via the lead wires. The inherent bending and vibration of the vibrating body is affected by the outside vibration, and a gyro-characteristics such as a drift characteristics and a detecting sensitivity becomes unstable. The gyro-characteristics becomes unstable by a leakage of the vibration of the vibrating body to the lead wires.

In these vibratory gyroscopes, since the lead wires have a circular cross section, it is difficult to establish a tight contact between the lead wires and the piezoelectric elements of the vibrating body. When enlarging the cross section of the lead wires for the purpose of enhancing the quality of the contact, the vibration of the vibrating body is restrained by the lead wires, which results in unstable characteristics of the vibratory gyroscope.

DE-A-3926504 discloses a vibration excitation device having a prism-shaped body with three faces on each of which a piezoelectric element is formed. Via connection lines, these piezoelectric elements are connected with a detector circuit.

US-A-5,014,554 discloses an angular rate sensor. This angular rate sensor comprises a pair of parallel piezoelectric bimorph vibration elements in the form of rectangular stripes and a further pair also in the form of rectangular stripes. Lead terminals for electrical connection of the vibratory elements are provided and secured to a support base.

JP-A-3053110 discloses an angular velocity sensor comprising a driving piezoelectric vibrator. Lead wires are connected to the piezoelectric vibrator.

It is the object of the invention to provide a vibratory gyroscope having a tight contact between the lead wires and the piezoelectric elements of the vibrating body without affecting the stability of the detection characteristics of the vibratory gyroscope.

This object is achieved by a vibratory gyroscope in accordance with claim 1.

An embodiment of the present invention comprises, an angular prism-shaped vibrating body, a piezoelectric element formed on a side face of the vibrating body, and a lead wire connected to the piezoelectric element and having a plane on its side face, the plane of the lead wire is brought in face contact with the side face of the vibrating body.

In the embodiment of the present invention, a contact area between the vibrating body and the lead wire is increased without restraining the vibration of the vibrating body.

According to the embodiment of the present invention, since the contact area between the vibrating body and the lead wire is increased, it is hardly affected by the outside vibration, temperature change and so on.

The above objects, features, aspects and advantages of the present invention will become more apparent from the following detailed description of the embodiments with reference to the accompanying drawings.

Fig. 1 is a perspective view showing one embodiment.

Fig. 2 is a sectional view of the embodiment shown in Fig. 1.

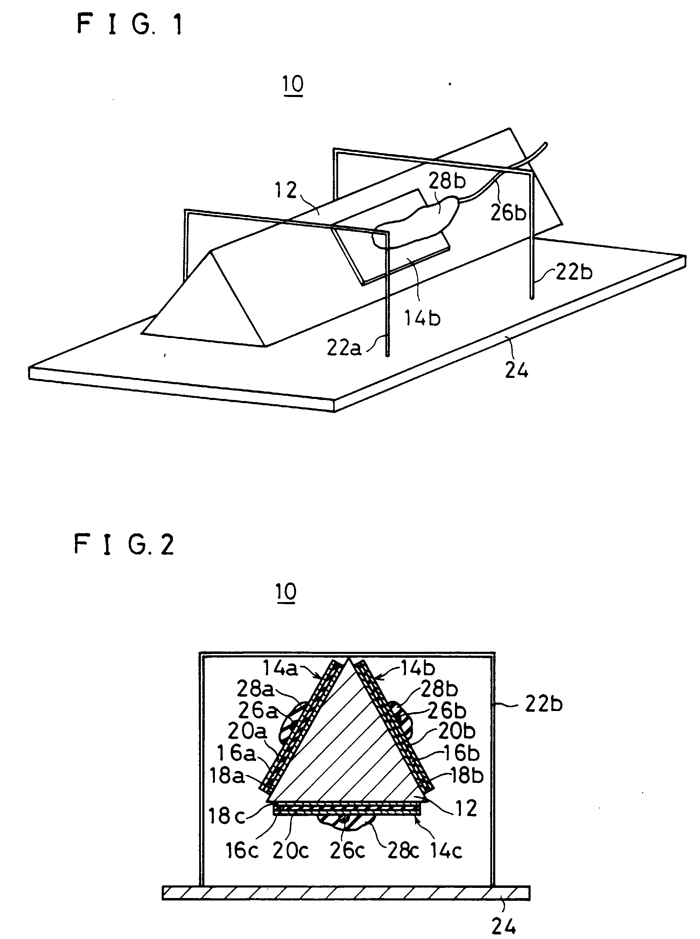

Fig, 3 is a sectional view of an essential portion of the embodiment shown in Fig. 1.

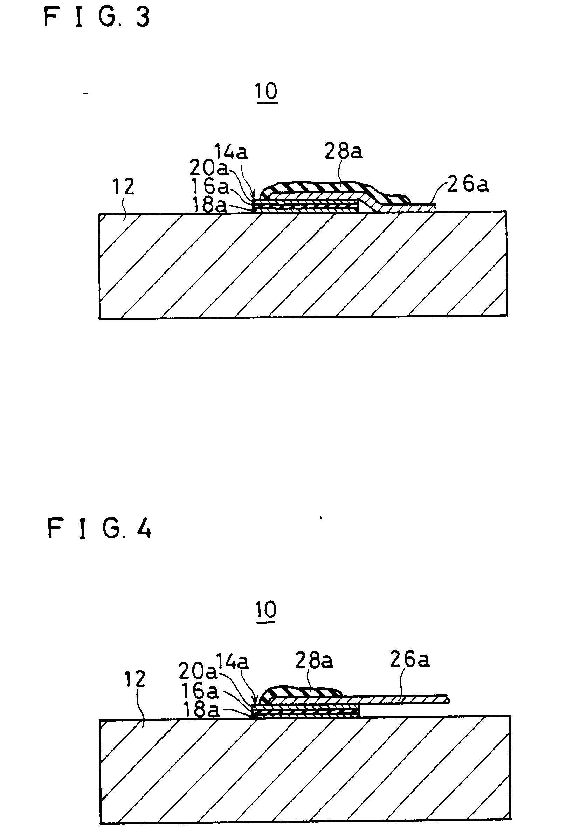

Fig. 4 is a sectional view of an essential portion showing a modified example of the embodiment shown in Fig. 1.

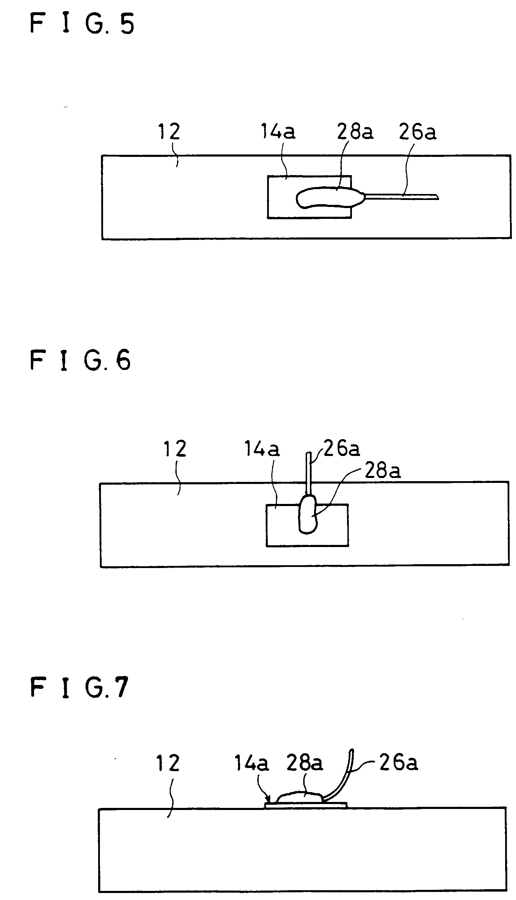

Fig. 5, Fig. 6 and Fig. 7 are illustrative views respectively showing a draw-out direction of a lead wire.

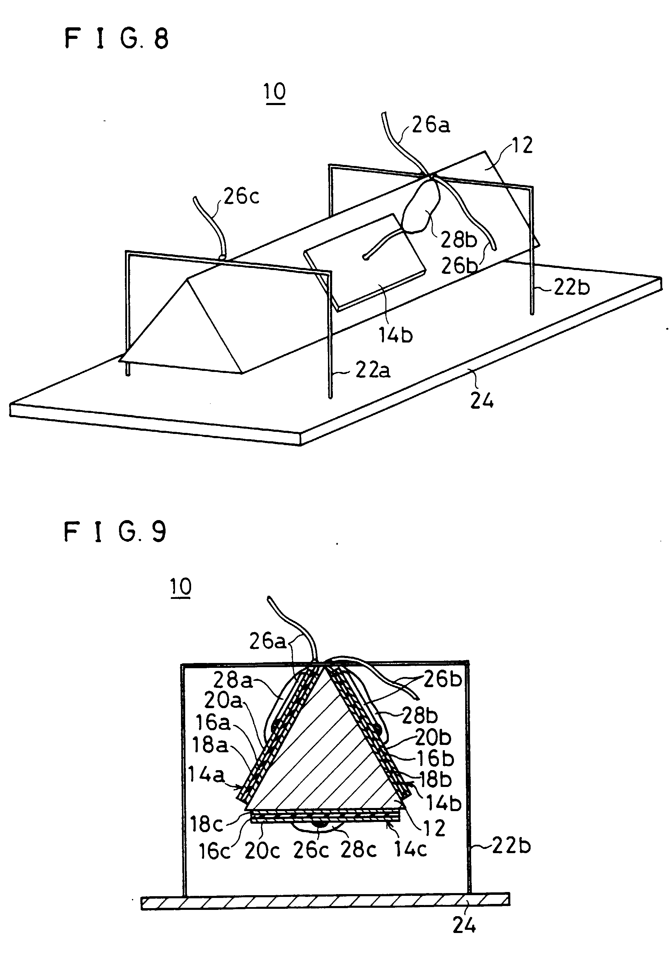

Fig. 8 is a perspective view showing another embodiment.

Fig. 9 is a sectional view of the embodiment shown in Fig. 8.

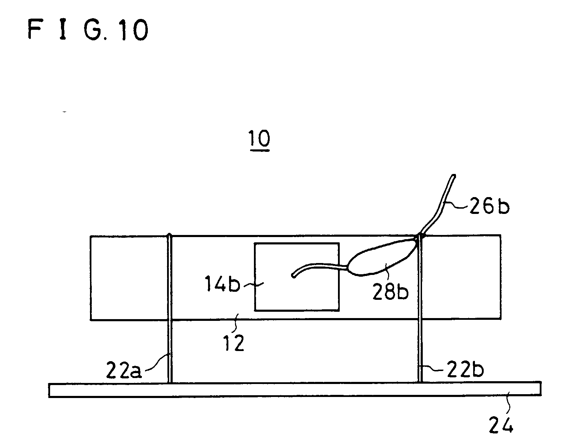

Fig. 10 is a side view of the embodiment shown in Fig. 8.

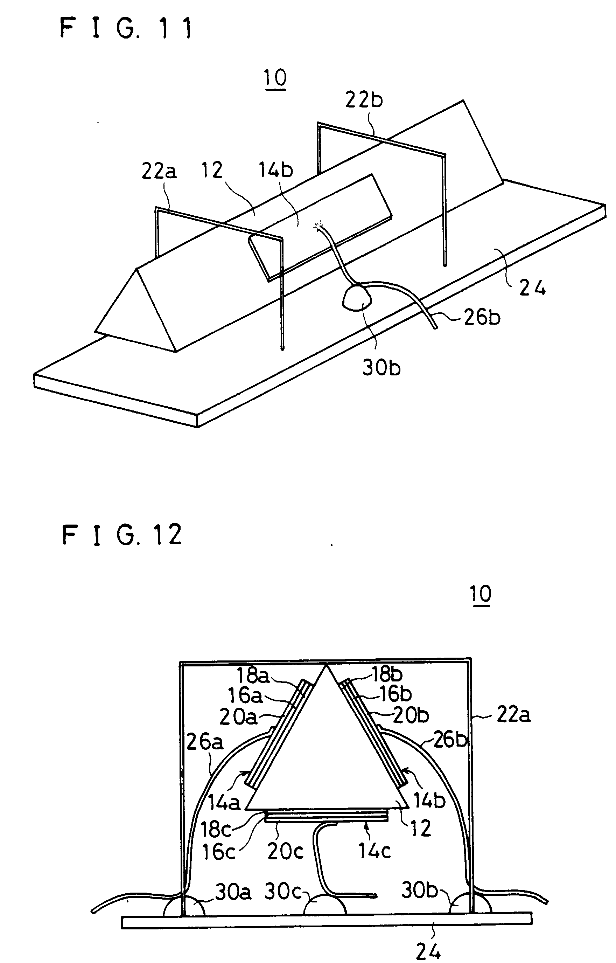

Fig. 11 is a perspective view showing a third embodiment.

Fig. 12 is a front view of the embodiment shown in Fig. 11.

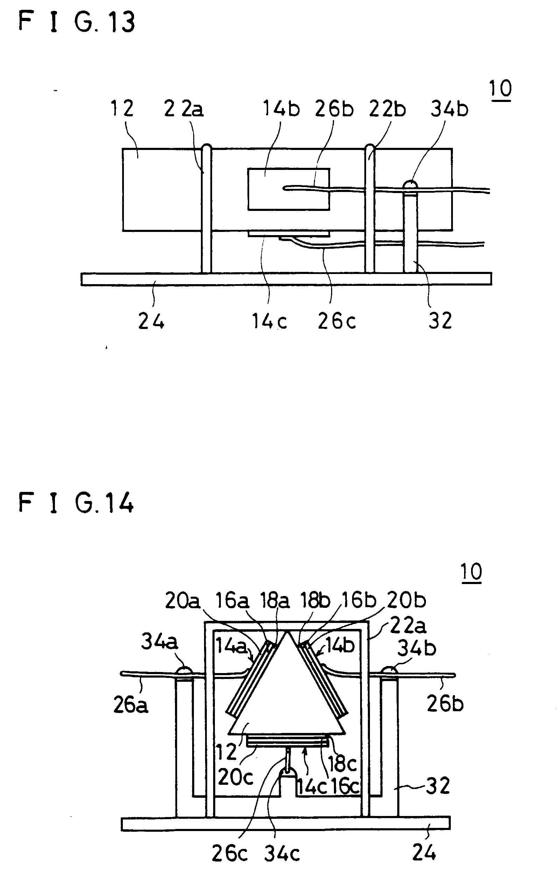

Fig. 13 is a side view showing a fourth embodiment.

Fig. 14 is a front view of the embodiment shown in Fig. 13.

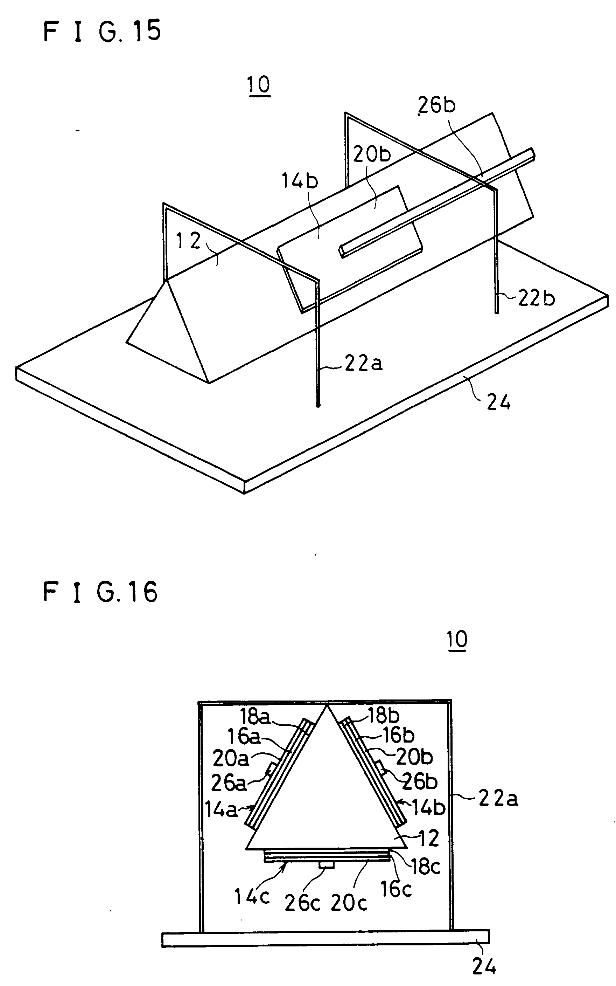

Fig. 15 is a perspective view showing an embodiment.

Fig. 16 is a front view of the embodiment shown in Fig. 15.

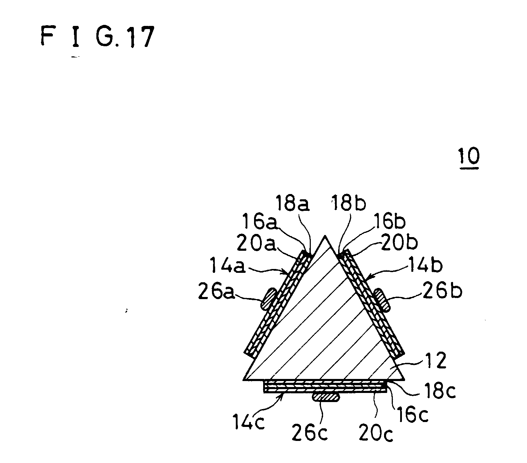

Fig. 17 is a sectional view showing a modified example of the embodiment shown in Fig. 15.

Fig. 18 is a perspective view showing an example of a conventional vibratory gyroscope which is a background of the present invention.

Fig. 19 is a sectional view of the vibratory gyroscope shown in Fig. 18.

Fig. 20 is a perspective view showing another example of a conventional vibratory gyroscope which is a background of the present invention.

Fig. 21 is a sectional view of the vibratory gyroscope shown in Fig. 20.

### DESCRIPTION OF THE PREFERRED EMBODIMENTS

Fig. 1 is a perspective view showing one embodiment, and Fig. 2 is a sectional view thereof. The vibratory gyroscope 10 comprises a vibrating body 12. The vibrating body 12 is formed into a regular triangular-prism shape with a material which generates a mechanical vibration such as elinver.

On the center portions of three side faces of the vibrating body 12, piezoelectric elements 14a, 14b and 14c are formed. The piezoelectric element 14a comprises a plate-shaped piezoelectric body 16a, on both surfaces of which electrodes 18a and 20a are formed. One electrode 18a of the piezoelectric element 14a is bonded to the side face of the vibrating body 12. Similarly, the piezoelectric elements 14b and 14c comprise piezoelectric bodies 16b and 16c, on both surfaces of which electrodes 18b, 20b and 18c, 20c are formed respectively. The electrodes 18b and 18c of the piezoelectric elements 14b and 14c are bonded to the side faces of the vibrating body 12.

To a ridge line portion of the vibrating body 12, two supporting members 22a and 22b consisting of, for example, a wire material are mounted. In this case, center portions of the supporting members 22a and 22b are fixed to the vicinity of nodal points of the vibrating body 12 by means of soldering or the like. Positions for fixing the supporting members 22a and 22b are at 0.224L from opposite ends of the vibrating body 12, where L is the length of vibrating body 12. Each end portions of the supporting members 22a and 22b are fixed to one surface of a base plate 24. Thus, the vibrating body 12 is supported above one surface of the base plate 24 by the two supporting members 22a and 22b.

Furthermore, to the electrodes 20a, 20b and 20c of the piezoelectric elements 14a, 14b and 14c, lead wires 26a, 26b and 26c are respectively connected by means of soldering or the like.

Meanwhile, as particularly shown in Fig. 3, the lead wire 26a is fixed to the piezoelectric element 14a by an elastic adhesive 28a consisting of an elastic material such as silicon. Similarly, the lead wires 26b and 26c are fixed to the piezoelectric elements 14b and 14c by elastic adhesives 28b and 28c consisting of the elastic material. In this embodiment, at portions of the vibrating body 12 in the vicinity of the piezoelectric elements 14a-14c, the elastic adhesives 28a, 28b and 28c are coated.

In the vibratory gyroscope 10, a driving signal is applied to the piezoelectric elements 14a-14c through the lead wires 26a-26c. The driving signal is applied between the two piezoelectric elements 14a and 14b and the another piezoelectric element 14c. By the driving signal, the vibrating body 12 bends and vibrates in a direction orthogonal to the surface whereon the piezoelectric element 14c is formed. When rotating about an axial direction of the vibrating body 12, its vibrating direction changes due to a Coriolis force. Responsive to the vibrating direction, voltages are generated in the piezoelectric elements 14a and 14b.

In this case, since the piezoelectric elements 14a and 14b are formed in different directions, the respective voltages generated are different. Thus, when measuring the output voltage difference of the piezoelectric elements 14a and 14b, a larger output can be obtained as compared with a quadrangular prism-shaped vibratory gyroscope whose two detecting piezoelectric elements are formed in parallel. Therefore, a large output can be obtained responsive to a rotational angular velocity applied to the vibratory gyroscope 10. That is, by forming the vibrating body 12 into a triangular-prism shaped, a large detecting sensitivity can be obtained.

In the vibratory gyroscope 10, since the lead wires 26a-26c are fixed to the piezoelectric elements 14a-14c and the vibrating body 12 by the elastic adhesives 28a-28c, the outside vibration transmitted to the lead wires 26a-26c is damped by the elastic adhesives 28a-28c. Thus, the bending and vibration of the vibrating body 12 is hardly affected by the outside vibration. The detecting sensitivity maybe somewhat deteriorated by fixing the lead wires 26a-26c by the elastic adhesives 28a-28c. However, since the detecting sensitivity is improved by forming the vibrating body 12 into the triangular-prism shape, even though the detecting sensitivity is deteriorated by the elastic adhesives 28a-28c, still the larger detecting sensitivity can be obtained as compared with those using the quadrangular prism-shaped vibrating body. As such, the vibratory gyroscope 10 is hardly affected by the outside vibration and its detecting sensitivity is good.

In the above-mentioned embodiment, though the lead wires 26a-26c are fixed to the piezoelectric elements 14a-14c and the vibrating body 12, as shown in Fig. 4, they may be fixed only to the piezoelectric elements 14a-14c. As such, the outside vibration transmitted to the lead wires 26a-26c is damped by a little amount of elastic adhesives 28a-28c, and the vibratory gyroscope having a good detecting sensitivity can be obtained. Besides, since the lead wires 26a-26c are just needed to be fixed at minimal requirement near the contact points with the piezoelectric elements 14a-14c, draw-out directions of the lead wires 26a-26c may be in all directions such as longitudinal and lateral directions of the vibrating body 12 and a direction orthogonal to the forming surface of the piezoelectric element. Moreover, in this case, since the lead wires 26a-26c are not fixed to the portions of the vibrating body 12 which are apart from the piezoelectric elements 14a-14c, the lead wires 26a-26c can be shortened as compared with such cases.

Fig. 8 is a perspective view showing another embodiment, Fig. 9 is a sectional view thereof, and Fig. 10 is a side view thereof. In this embodiment, the lead wires 26a and 26b are, particularly, wound around the supporting member 22b along the vibrating body 12. Furthermore, the lead wires 26a and 26b are fixed to the vibrating body 12 from the supporting member 22b to the vicinity of the piezoelectric elements 14a and 14b, by the elastic adhesives 28a and 28b consisting of an elastic material such as silicon.

In a same manner, the lead wire 26c is fixed along the vibrating body 12 by the elastic adhesive 28c consisting of the elastic material, and is wound around the supporting member 22a.

Thus, the lead wires 26a and 26b are drawn out from the supporting member 22b and the lead wire 26c is drawn out from the supporting member 22a.

When using the vibratory gyroscope 10, a driving signal is applied between the piezoelectric elements 14a, 14b and the piezoelectric element 14c through the lead wires 26a-26c. By the driving signal, the vibrating body 12 bends and vibrates in a direction orthogonal to a surface whereon the piezoelectric element 14c is formed. In this state, when rotating about an axial direction of the vibrating body 12, the vibrating direction changes due to a Coriolis force. Thereby, voltages are generated in the piezoelectric elements 14a and 14b. By measuring the voltage difference of the piezoelectric elements 14a and 14b, a rotational angular velocity applied to the vibratory gyroscope 10 is measured.

In the vibratory gyroscope 10, since the lead wires 26a-26c are fixed to the vibrating body 12 by the elastic adhesives 28a-28c, which serve as a damping agent. And hence, the outside vibration transmitted to the lead wires 26a-26c is damped by the elastic adhesives 28a-28c, and the bending and vibration of the vibrating body 12 is hardly affected. Since the lead wires 26a-26c are integrated with the vibrating body 12 and drawn out from the supporting members 22a and 22b, the lead wires 26a-26c vibrate together with the vibrating body 12. Furthermore, since the supporting members 22a and 22b are mounted to the vicinity of nodal points of the vibrating body 12, the vibration of the vibrating body 12 hardly loads to the lead wires 26a-26c drawn out from the vicinity of the supporting members 22a and 22b.

As such, in the vibratory gyroscope 10, the outside vibration has no appreciable effect, and since a vibration leak of the vibrating body 12 is little, the gyro-characteristics such as the drift characteristics and the detecting sensitivity is stabilized.

Fig. 11 is a perspective view showing a third embodiment, and Fig. 12 is a front view thereof. In this embodiment, particularly, on one surface of a base plate 24, for example, three hemispherical elastic stands 30a, 30b and 30c are provided. The elastic stands 30a-30c are formed by an elastic material such as rubber having a vibration damping effect. To the three elastic stands 30a-30c, intermediate portions of the three lead wires 26a-26c are respectively secured by adhesives.

In the vibratory gyroscope 10, since the intermediate portions of the lead wires 26a-26c are secured by the elastic stands 30a-30c consisting of the elastic material, the outside vibration transmitted to the lead wires 26a-26c is damped by the elastic stands 30a-30c. Therefore, the vibratory gyroscope 10 is hardly affected by the outside vibration. Besides, the internal vibration of the vibrating body does not leak to the outside, thus characteristics is stabilized. In addition, in the vibratory gyroscope 10, since one ends of the lead wires 26a-26c connected to the piezoelectric elements 14a-14c are not secured by the elastic adhesives or the like, the draw-out direction of the lead wires 26a-26c is not limited.

Fig. 13 is a side view showing a fourth embodiment, and Fig. 14 is a front view thereof. In this embodiment, as compared with the embodiment shown in Fig. 11, particularly, the elastic stands 30a-30c are not provided, and on one surface of the base plate 24, for example, an E-shaped intermediate stand 32 consisting of an inelastic material is provided.

Intermediate portions of the three lead wires 26a-26c connected to the three piezoelectric elements 14a-14c are respectively secured to three end portions of the intermediate stand 32, by elastic adhesives 34a, 34b and 34c consisting of an elastic material such as silicon.

In the embodiment shown in Fig. 13, since the intermediate portions of the lead wires 26a-26c are secured by the elastic adhesives 34a-34c consisting of the elastic material, the outside vibration transmitted to the lead wires 26a-26c is damped, and the draw-out direction of the lead wires 26a-26c is not limited.

In the embodiment shown in Fig. 13, when the intermediate stand 32 is formed by the elastic material, even when the intermediate portions of the lead wires 26a-26c are secured to the intermediate stand 32 merely by adhesives, the outside vibration transmitted to the lead-wires 26a-26c can be damped, and at the same time, the draw-out direction of the lead wires 26a-26c is not limited.

Fig. 15 is a perspective view of an embodiment, and Fig. 16 is a front view thereof. In this embodiment, the lead wires 26a-26c are respectively formed into, for example, a rectangular section. Wide side faces of the lead wires 26a-26c are respectively soldered to electrodes 20a-20c of the piezoelectric elements 14a-14c. Furthermore, the wide side faces of the lead wires 26a-26c closely touch to the side faces of the vibrating body 12.

In the vibratory gyroscope 10, as compared with the conventional examples shown in Fig. 18 through Fig. 21, since contact areas between the vibrating body 12 and the lead wires 26a-26c increase, the outside vibration and temperature change have little effect and the characteristics is stabilized.

Furthermore, in the vibratory gyroscope 10, since the lead wired 26a-26c are formed into a flat shape, the vibrating direction of the lead wires 26a-26c itself is oriented. And hence, vibrations in the other directions can be restrained and characteristics of the vibrating body 12 can be stabilized. Meanwhile, negative effects due to the lead wires 26a-26c can be reduced and characteristics of the vibrating body 12 can be exhibited sufficiently.

Fig. 17 is a sectional view showing a modified example of the embodiment shown in Fig. 15. In this embodiment, particularly, the lead wires 26a-26c having a rectangular section are used.

In this embodiment, as compared with the conventional examples shown in Fig. 18 through Fig. 21, since the contact areas between the vibrating body 12 and the lead wires 26a-26c increase, the characteristics is stabilized. Furthermore, in this embodiment, the vibrating direction of the lead wires 26a-26c itself is oriented.

In the above-mentioned embodiments, though a regular triangular prism-shaped vibrating body 12 is used, in the present invention, the vibrating body may be formed into a polygonal prism shape such as a quadrangular prism shape.

In the above-mentioned embodiments, though three piezoelectric elements are used, in the present invention, one or more piezoelectric elements may be used.

It will be apparent from the foregoing that, while the present invention has been described in detail and illustrated, these are only particular illustrations and examples, and the invention is not limited to these. The scope of the invention is limited only by the appended claims.

## Claims

1. A vibratory gyroscope comprising:
an angular prism-shaped vibrating body (12),
a piezoelectric element (14a,14b,14c) formed on a side face of the vibrating body (12), and
a lead wire (26a,26b,26c) connected to said piezoelectric element (14a,14b,14c);
characterized in that
said lead wire (26a,26b,26c) is formed into a thin flat shape for establishing a main side surface extending in the length direction of the lead wire, wherein said side surface is fixed to said piezoelectric element (14a,14b,14c).

2. A vibratory gyroscope according to claim 1, wherein said lead wire (26a,26b,26c) is fixed by an elastic material (28a,28b,28c).

3. A vibratory gyroscope according to claim 2, wherein said lead wire (26a,26b,26c) is fixed to said piezoelectric element (14a,14b,14c) by said elastic material (28a,28b,28c).

4. A vibratory gyroscope according to claim 3, wherein said vibrating body (12) is in a triangular prism shape.

5. A vibratory gyroscope according to claim 2, wherein said lead wire (26a,26b,26c) is fixed to said vibrating body (12) by said elastic material (28a,28b,28c).

6. A vibratory gyroscope according to claim 5, which further comprises a supporting member (22a,22b) mounted to the vicinity of nodal points of said vibrating body (12) for supporting said vibrating body (12).

7. A vibratory gyroscope according to claim 6, wherein said lead wire (26a,26b,26c) is fixed to said supporting member (22a,22b) along said vibrating body (12).

8. A vibratory gyroscope according to claim 1, wherein a portion of said lead wire (26a,26b,26c) not being connected to said piezoelectric element is secured to said vibrating body (12) by said elastic material (28a,28b,28c).

9. A vibratory gyroscope according to claim 8, which further comprises a base plate (24), and
a supporting member (22a,22b) for supporting said vibrating body (12) above said base plate (24).

10. A vibratory gyroscope according to claim 9, wherein said elastic material is formed on said base plate (24)

11. A vibratory gyroscope according to claim 10, wherein said elastic material includes a hemispherical elastic stand (30a,30b,30c).

12. A vibratory gyroscope according to claim 9, which further comprises an intermediate stand (32) formed on said base plate (24) and consisting of an inelastic material,
wherein an intermediate portion of said lead wire (26a,26b,26c) is secured to said intermediate stand (32) by said elastic material (34a,34b,34c).

## Patentansprüche

1. Ein Vibrationsgyroskop mit folgenden Merkmalen:
einem winkligen, prismenförmigen Schwingkörper (12),
einem piezoelektrischen Element (14a, 14b, 14c), das auf einer Seitenfläche des Schwingkörpers (12) gebildet ist, und
einem Anschlußleitungsdraht (26a, 26b, 26c), der mit dem piezoelektrischen Element (14a, (14b, 14c) verbunden ist;
dadurch gekennzeichnet, daß
der Anschlußleitungsdraht (26a, 26b, 26c) in einer dünnen flachen Form ausgebildet ist, um eine Hauptseitenoberfläche zu bilden, die sich in der Längenrichtung des Anschlußleitungsdrahts erstreckt, wobei die Seitenoberfläche an den piezoelektrischen Elementen (14a, 14b, 14c) befestigt ist.

2. Ein Vibrationsgyroskop gemäß Anspruch 1, bei dem der Anschlußleitungsdraht (26a, 26b, 26c) durch ein elastisches Material (28a, 28b, 28c) befestigt ist.

3. Ein Vibrationsgyroskop gemäß Anspruch 2, bei dem der Anschlußleitungsdraht (26a, 26b, 26c) durch das elastische Material (28a, 28b, 28c) an den piezoelektrischen Elementen (14a, 14b, 14c) befestigt ist.

4. Ein Vibrationsgyroskop gemäß Anspruch 3, bei dem der Schwingkörper (12) in einer dreieckigen Prismenform ist.

5. Ein Vibrationsgyroskop gemäß Anspruch 2, bei dem der Anschlußleitungsdraht (26a, 26b, 26c) durch das elastische Material (28a, 28b, 28c) an dem Schwingkörper (12) befestigt ist.

6. Ein Vibrationsgyroskop gemäß Anspruch 5, welches ferner ein Trägerbauglied (22a, 22b) aufweist, das zum Tragen des Schwingkörpers (12) in der Nähe der Knotenpunkte des Schwingkörpers (12) befestigt ist.

7. Ein Vibrationsgyroskop gemäß Anspruch 6, bei dem der Anschlußleitungsdraht (26a, 26b, 26c) entlang des Schwingkörpers (12) an dem Trägerbauglied (22a, 22b) befestigt ist.

8. Ein Vibrationsgyroskop gemäß Anspruch 1, bei dem ein Abschnitt des Anschlußleitungsdrahts (26a, 26b, 26c), der nicht mit dem piezoelektrischen Element verbunden ist, durch das elastische Material (28a, 28b, 28c) an dem Schwingkörper (12) befestigt ist.

9. Ein Vibrationsgyroskop gemäß Anspruch 8, welches ferner folgende Merkmale aufweist:
eine Basisplatte (24); und
ein Trägerbauglied (22a, 22b) zum Tragen des Schwingkörpers (12) über der Basisplatte (24).

10. Ein Vibrationsgyroskop gemäß Anspruch 9, bei dem das elastische Material auf der Basisplatte (24) gebildet ist.

11. Ein Vibrationsgyroskop gemäß Anspruch 10, bei dem das elastische Material eine halbkugelförmige elastische Stütze (30a, 30b, 30c) aufweist.

12. Ein Vibrationsgyroskop gemäß Anspruch 9, welches ferner
eine Zwischenstütze (32), die auf der Basisplatte (24) gebildet ist und aus einem nicht-elastischen Material besteht, aufweist,
wobei ein Zwischenabschnitt des Anschlußleitungsdrahts (26a, 26b, 26c) durch das elastische Material (34a, 34b, 34c) an der Zwischenstütze (32) befestigt ist.

## Revendications

1. Gyroscope vibratoire, comprenant:
un corps vibrant (12) en forme de prisme angulaire,
un élément piézoélectrique (14a, 14b, 14c) formé sur une face latérale du corps vibrant (12), et
un conducteur (26a, 26b, 26c) connecté audit élément piézoélectrique (14a, 14b, 14c),
caractérisé par le fait que ledit conducteur (26a, 26b, 26c) est réalisé en une mince forme plane, afin de constituer une surface latérale principale s'étendant dans le sens longitudinal du conducteur, dans lequel ladite surface latérale est fixée audit élément piézoélectrique (14a, 14b, 14c).

2. Gyroscope vibratoire suivant la revendication 1, dans lequel ledit conducteur (26a, 26b, 26c) est fixé par un matériau élastique (28a, 28b, 28c).

3. Gyroscope vibratoire suivant la revendication 2, dans lequel ledit conducteur (26a, 26b, 26c) est fixé audit élément piézoélectrique (14a, 14b, 14c) par ledit matériau élastique (28a, 28b, 28c).

4. Gyroscope vibratoire suivant la revendication 3, dans lequel ledit corps vibrant (12) est en forme de prisme triangulaire.

5. Gyroscope vibratoire suivant la revendication 2, dans lequel ledit conducteur (26a, 26b, 26c) est fixé audit corps vibrant (12) par ledit matériau élastique (28a, 28b, 28c).

6. Gyroscope vibratoire suivant la revendication 5, qui comprend, par ailleurs, un élément de support (22a, 22b) monté dans le voisinage de points nodaux dudit corps vibrant (12) pour supporter ledit corps vibrant (12).

7. Gyroscope vibratoire suivant la revendication 6, dans lequel ledit conducteur (26a, 26b, 26c) est fixé audit élément de support (22a, 22b) le long dudit corps vibrant (12).

8. Gyroscope vibratoire suivant la revendication 1, dans lequel une partie dudit conducteur (26a, 26b, 26c) non connectée audit élément piézoélectrique est fixée audit corps vibrant (12) par ledit matériau élastique (28a, 28b, 28c).

9. Gyroscope vibratoire suivant la revendication 8, qui comprend, par ailleurs, une plaque de base (24) et un élément de support destiné à supporter ledit corps vibrant (12) au-dessus de ladite plaque de base (24).

10. Gyroscope vibratoire suivant la revendication 9, dans lequel ledit matériau élastique est formé sur ladite plaque de base (24).

11. Gyroscope vibratoire suivant la revendication 10, dans lequel ledit matériau élastique comporte un support élastique semi-sphérique (30a, 30b, 30c).

12. Gyroscope vibratoire suivant la revendication 9, qui comprend, par ailleurs, un support intermédiaire (32) formé sur ladite plaque de base (24) et réalisé en un matériau non-élastique, dans lequel une partie intermédiaire dudit conducteur (26a, 26b, 26c) est fixée audit support intermédiaire (32) par ledit matériau élastique (34a, 34b, 34c).
